# EUROPÄISCHE PATENTSCHRIFT

(11) **EP 0 306 611 B1**
(45) Veröffentlichungstag und Bekanntmachung des Hinweises auf die Patenterteilung: **15.06.1994**
(21) Anmeldenummer: 88106455.4
(22) Anmeldetag: 22.04.1988
(51) Int. Cl.: G05D 3/14

(54) **Einrichtung zum Steuern oder Regeln der Lage eines Stellglieds mit Servomotor und Rückmeldepotentiometer**
Device for monitoring or controlling the position of an actuator with servomotor and feedback potentiometer
Dispositif de commande ou de régulation de la position d'un actionneur par servomoteur et potentiomètre de contre-réaction

(30) Priorität: 18.08.1987 DE 3727499
(43) Veröffentlichungstag der Anmeldung: 15.03.1989
(73) Patentinhaber: Hella KG Hueck & Co., D-59538 Lippstadt (DE)
(72) Erfinder: Knittel, Otto, D-4770 Soest (DE)

(56) Entgegenhaltungen:
- EP-A- 0 186 596
- DE-A- 1 463 155
- DE-A- 2 003 235
- US-A- 4 038 588
- US-A- 4 223 258
- US-A- 4 463 296

## Beschreibung

Die Erfindung betrifft eine Einrichtung zum Steuern oder Regeln der Lage eines Stellglieds, insbesondere eines Stellglieds zum Steuern der Innenraumtemperatur oder Leuchtweite von Kraftfahrzeugen, gemäß dem Oberbegriff des Anspruchs 1.

Derartige Vorrichtungen werden insbesondere in Kraftfahrzeugen verwendet zur Beeinflussung der Temperatur und/oder der Verteilung der den Kraftfahrzeuginnenraum durchströmenden Luft oder zur Regelung der Leuchtweite von Scheinwerfern. Dazu sind Stellglieder, wie z. B. Luftklappen in Luftschächten oder Wasserventile in Heizwasserkreisläufen von Brennkraftmaschinen der Kraftfahrzeuge erforderlich, deren Stellung durch elektrische Stellvorrichtungen veränderbar sind. Insbesondere Innenraumtemperaturregelvorrichtungen in Kraftfahrzeugen weisen eine Vielzahl z. B. fünf solcher Stellvorrichtungen auf, die durch die Heizungsregelung unabhängig voneinander steuerbar sind.

Aus der DE-OS 35 10 648 ist eine Einrichtung bekannt, die eine Stellvorrichtung mit Stellmotor und Rückmelde-Potentiometer aufweist. Der Stellmotor ist durch die Heizungssteuerung oder Heizungsregelung steuerbar und dient zur Beeinflussung der Stellung des Stellglieds. Das Rückmelde-Potentiometer ist Teil eines Lageregelkreises, der in der Heizungssteuerung oder Heizungsregelung angeordnet ist und der eine der Stellung von Stellglied und Stellmotor entsprechende Spannung an die Heizungssteuerung oder Heizungsregelung zurückmeldet.

Diese vorbekannte Vorrichtung hat jedoch Nachteile. Zur elektrischen Verbindung der Heizungssteuerung oder Heizungsregelung mit jeder Stellvorrichtung sind jeweils mindestens vier Leitungen erforderlich. Zwei Leitungen verbinden den Stellmotor mit der Heizungssteuerung oder Heizungsregelung. Zwei bis drei weitere Leitungen sind zur elektrischen Verbindung des Rückmelde-Potentiometers mit der Heizungssteuerung oder Heizungsregelung notwendig, abhängig davon, ob die Masse an der Kraftfahrzeugkarosserie abgegriffen wird.

Dies verteuert den Aufbau der vorbekannten Einrichtung, weil insbesondere in Kraftfahrzeugen eine Vielzahl elektrischer Leitungen Zeit und kostenaufwendig zu verlegen ist und weil eine große Menge Leitungen zu beschaffen ist.

Durch die Vielzahl erforderlicher Verbindungsleitungen weist die vorbekannte Einrichtung ein vergleichsweise hohes Gewicht auf, das den Forderungen nach energiesparenden Leichtbau, insbesondere von Kraftfahrzeugen, entgegensteht.

Die Leitungen, insbesondere die Rückmelde-Leitung vom Rückmelde-Potentiometer zur Steuerung oder Regelung, sind möglicherweise anfällig für hochfrequente Einstreuungen aus den übrigen Teilen des Kraftfahrzeugbordnetzes bzw. gegen Spannungsschwankungen des Kraftfahrzeugbordnetzes. Dies kann zu Störungen in der Stellungsänderung des Stellgliedes der vorbekannten Einrichtung führen und die vorbekannte Einrichtung störanfällig machen.

Aus der US 42 23 258 ist eine Einrichtung zum Steuern oder Regeln der Lage eines Stellgliedes gemäß dem Oberbegriff des Anspruchs 1 vorbekannt. Diese Einrichtung enthält eine Stellvorrichtung, die einen Lageregelkreis und ein Rückmelde-Potentiometer aufweist. Die Stellvorrichtung wird durch eine Pulsfolge gesteuert. Die Pulsfolge weist eine konstante Periode auf. Darüber hinaus weist die Pulsfolge eine abhängig von der Steuerung oder Regelung veränderliche Pulsbreite auf.

Dadurch, daß die Stellvorrichtung durch eine Pulsfolge steuerbar ist, ist nur noch eine Leitung zur Steuerung des Stellmotors erforderlich. Dadurch, daß die Stellvorrichtung den Lageregelkreis aufweist, ist keine Rückmelde-Leitung zur Rückmeldung einer Schleiferstellung des Rückmelde-Potentiometers an die Steuerung erforderlich. Durch beide Maßnahmen kann also die Zahl der erforderlichen Verbindungsleitungen von vier bis fünf auf eins, zwei bis drei reduziert werden.

Diese vorbekannte Einrichtung weist jedoch den Nachteil auf, daß sie konstruktiv aufwendig gestaltet ist. Die vorbekannte Einrichtung weist eine Vielzahl elektronischer Bauteile auf, um die vorgesehene Pulsfolge und das in dieser Pulsfolge enthaltene Stellungssignal aufzubereiten und an das Stellglied zu übermitteln.

Die Erfindung hat die Aufgabe, eine Einrichtung zu schaffen, die gegenüber dem Vorbekannten einfacher und kostengünstiger aufgebaut ist und die gleiche Steuerung oder Regelung des Stellgliedes mit einfacheren Mitteln ermöglicht.

Diese Aufgabe wird durch die Kennzeichenmerkmale des Anspruchs 1 gelöst.

Die Erfindung weist gegenüber dem Vorbekannten den Vorteil auf, daß mit wenigen vergleichsweise einfachen Schaltungskomponenten, wie Vergleicher, monostabilen Kippschaltungen und einem Spannungsteiler, eine einfache kostengünstige und betreibssichere Lösung zur Auswertung der Pulsfolge geschaffen wird. Dabei ist die Qualität der Auswertung der Pulsfolge, und damit die Stellgenauigkeit bei der Steuerung oder Regelung der Lage des Stellgliedes, durchaus mit den vorbekannten Lösungen vergleichbar.

Weitere vorteilhafte Ausgestaltungen und Weiterbildungen des Erfindungsgegenstands gehen aus den Unteransprüchen hervor.

Ein Ausführungsbeispiel des Erfindungsgegenstands ist in den Zeichnungen dargestellt und wird im folgendem näher erläutert:
Es zeigen
Figur 1 grobschematisch einen Installationsplan einer erfindungsgemäßen Einrichtung ausgebildet als Heizungssteuerung oder -regelung in einem Kraftfahrzeug,
Figur 2 ein Schaltbild einer Stellvorrichtung der erfindungsgemäßen Einrichtung nach Figur 1 und
Figur 3 Spannungszeitdiagramme an verschiedenen Meßpunkten der Stellvorrichtung nach Figur 2.

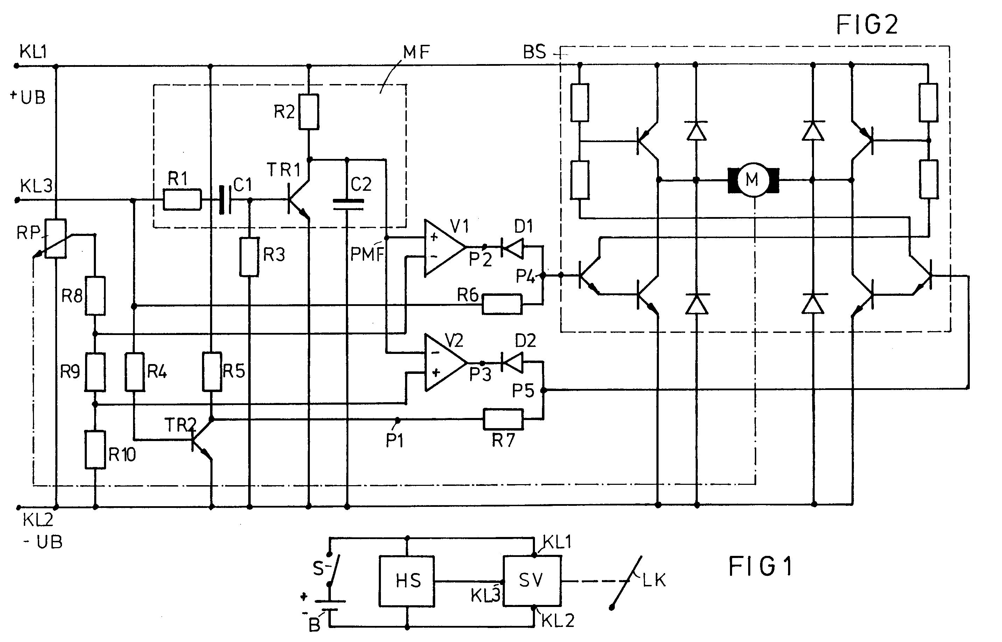

In der Figur 1 ist der positive Pol einer Stromquelle (B), die als Kraftfahrzeugbatterie ausgebildet sein kann, über einen Schalter (S), der als Zündanlaßschalter eines Kraftfahrzeugschalters ausgebildet sein kann, parallel mit einer Heizungssteuerung oder -regelung (HS) und an einer ersten Klemme (KL1) mit einer Stellvorrichtung (SV) leitend verbunden. Der negative Pol der Kraftfahrzeugbatterie (B) ist ebenfalls parallel mit der Heizungssteuerung oder -regelung (HS) und über eine zweite Klemme (KL2) mit der Stellvorrichtung (SV) leitend verbunden.

Über eine Steuerleitung ist die Heizungssteuerung oder -regelung (HS) mit einer dritten Klemme (KL3) der Stellvorrichtung (SV) leitend verbunden. Über diese Steuerleitung ist die Stellvorrichtung (SV) durch eine Pulsfolge der Heizungsteuerung oder -regelung (HS) steuerbar. Ein Stellmotor (M) der Stellvorrichtung (SV) ist derart mechanisch mit einer Luftklappe (LK) verbunden, daß er abhängig von seiner Bewegung die Stellung der Luftklappe (LK) in einem in den Figuren nicht dargestellten Luftführungskanal verändern kann. Durch diese Veränderung der Stellung der Luftklappe (LK) in einem Luftführungskanal kann der Luftdurchsatz durch den Luftführungskanal gedrosselt werden.

In der Figur 2 sind gleiche oder gleichwirkende Teile wie in der Figur 1 mit den gleichen Bezugszeichen versehen. Die erste Klemme (KL1) ist mit der positiven Versorgungsspannung (+UB) und die zweite Klemme (KL2) ist mit der negativen Versorgungsspannung (-UB) leitend verbunden. Die dritte Klemme (KL3) ist mit der Steuerleitung leitend verbunden zum Empfang der von der Heizungssteuerung oder -regelung (HS) ausgesandten Pulsfolge.

Die dritte Klemme (KL3) ist parallel mit einer monostabilen Kippschaltung oder Monoflop (MF) über einen sechsten Widerstand (R6) mit einem vierten Meßpunkt (P4) und über einen vierten Widerstand (R4) mit der Basis eines zweiten Transistors (TR2) leitend verbunden, dessen Emitter mit der zweiten Klemme (KL2) über einen fünften Widerstand (R5) mit der ersten Klemme (KL1) über einen siebten Widerstand (R7) mit einem fünften Meßpunkt (P5) leitend verbunden sind. Der Monoflop (MF) besteht aus einem ersten Widerstand (R1) an seinem Eingang, der mit der ersten Elektrode eines ersten Kondensators (C1) leitend verbunden ist, dessen zweite Elektrode parallel über einen dritten Widerstand (R3) mit der zweiten Klemme (KL2) und mit der Basis eines ersten NPN-Transistor (TR1) leitend verbunden ist. Der Emitter des ersten Transistors (TR1) ist mit der zweiten Klemme (KL2) leitend verbunden. Der Kollektor des ersten Transistors (TR1) ist parallel über einen zweiten Widerstand (R2) mit der ersten Klemme (KL1) über einen zweiten als Elektrolyd-Kondensator ausgebildeten Kondensator (C2) mit der zweiten Klemme (KL2) und über einen Monoflop-Meßpunkt (PMF) mit dem nichtinvertierenden Eingang eines ersten Vergleichers (V1) und einem invertierenden Eingang eines zweiten Vergleichers (V2) leitend verbunden.

Der Ausgang des ersten Vergleichers (V1) ist über einen zweiten Meßpunkt (P2) und eine antiparallelgeschaltete erste Diode (D1) mit dem vierten Meßpunkt (P4) leitend verbunden, der wiederum mit einer Basis eines Transistors einer bekannten Transistor-Brücken-Schaltung (BS) leitend verbunden ist, die zur Stromversorgung des Stellmotors (M) und zu dessen Umsteuerung dient. Der Ausgang des zweiten Vergleichers (V2) ist über einen dritten Meßpunkt (P3) und eine antiparallelgeschaltete zweite Diode (D2) mit dem fünften Meßpunkt (P5) leitend verbunden, der mit einer Basis eines weiteren Transistors der Transistor-Brücken-Schaltung (BS) leitend verbunden ist. Die Signale an den Meßpunkten (P4, P5) steuern zwei unterschiedliche Brückendiagonalen der Transistor-Brücke (BS) an, wodurch der Stellmotor (M) in seiner Drehrichtung umsteuerbar ist.

Die Stromversorgungsanschlüsse eines Rückmelde-Potentiometers (RP) sind einerseits mit der ersten Klemme (KL1) und andererseits mit der zweiten Klemme (KL2) leitend verbunden. Der Schleiferkontakt des Rückmelde-Potentiometers (RP) ist mit einer Serienschaltung dreier Widerstände (R8, R9, R10) leitend verbunden, dessen anderer Anschluß mit der zweiten Klemme (KL2) leitend verbunden ist. Die Widerstände (R8, R9, R10) bilden einen Spannungsteiler, der zwei Spannungsteiler der zwei Spannungsabgriffe aufweist. Die zwischen dem achten Widerstand (R8) und dem neunten Widerstand (R9) abgegriffene Spannung wird dem invertierenden Eingang des ersten Vergleichers (R1) zugeleitet. Die zwischen dem neunten Widerstand (R9) und dem zehnten Widerstand (R10) abgegriffene Spannung wird dem nichtinvertierenden Eingang des zweiten Vergleichers (V2) zugeleitet. Durch die Größe des neunten Widerstandes (R9) kann ein sogenannter Totbereich festgelegt werden, in dem die erfindungsgemäße Stellvorrichtung (SV) auch bei Änderungen entweder der Stellung der Luftklappe (LK) oder bei Änderungen der Pulsfolge an der Klemme (KL3) nicht in Funktion gesetzt wird. Dies trägt zu einem stabilen Steuerverhalten der Stellvorrichtung (SV) ohne Schwing- oder Flatterneigung bei.

Der Schleifer des Rückmelde-Potentiometers (RP) ist wie durch die strichpunktierte Linie in der Figur 2 dargestellt, mechanisch mit der Welle des Störmotors (M) verbunden, so daß die Stellung des Schleifers und damit der am Spannungsteiler anliegende Spannungswert von der Lage des Stellmotors (M) bzw. von der Stellung der Luftklappe abhängig ist.

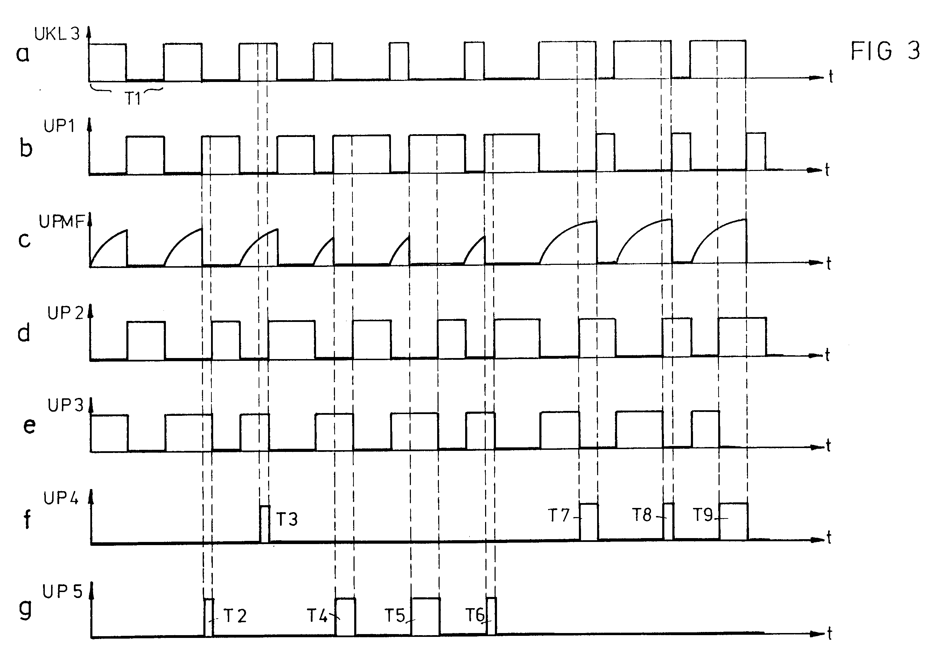

Die Funktion der erfindungsgemäß ausgebildeten Stellvorrichtung (SV) nach der Figur 2 wird nun anhand der Figur 3 näher erläutert:
Es sei angenommen, daß an der dritten Klemme (KL3) eine der Figur 3a entsprechende Pulsfolge anliegt. Die Frequenz und damit die Periode (T1) der Pulse sei dabei konstant. Die Pulsbreite der Pulse sei durch die Heizungssteuerung oder -regelung (HS) veränderbar. Das zu einem gegebenen Zeitpunkt (t) an der dritten Klemme (KL3) anliegende Signal bzw. Potential wird dann parallel dem Monoflop (MF), dem vierten Meßpunkt (P4) und der Basis des zweiten Transistors (TR2) zugeführt. Der zweite Transistor (TR2) dient zur Invertierung des Eingangssignals, so daß an einem ersten Meßpunkt (P1) das in der Figur 3b dargestellte zeitabhängige Potential meßbar ist. Die Pulsfolge am ersten Meßpunkt (P1) ist gleich der invertierten Pulsfolge an der Klemme (KL3).

Solange an der dritten Klemme (KL3) negatives oder Massepotential anliegt, befindet sich der erste Transistor (TR1) in seinem nichtstromleitenden Zustand, so daß sich der zweite Kondensator (C2) über den zweiten Widerstand (R2) auflädt. Mit jeder Änderung des Signals an der dritten Klemme (KL3) zu hohem oder Plus-Potential wird der erste Transistor (TR1) leitend geschaltet, so daß sich der zweite Kondensator (C2) über die Emitter-Kollektor-Strecke des ersten Transistors (TR1) entlädt. Demzufolge ist an dem Monoflop-Meßpunkt (PMF) das in der Figur 3c dargestellte Potential in seinem zeitlichen Verlauf meßbar.

Die Ausgangssignale der Vergleicher (V1 und V2) sind vom Potential vom Monoflop-Meßpunkt (PMF) und von der Spannung am Spannungsteiler, bestehend aus den Widerständen (R8, R9, R10), abhängig. Das Potential am Spannungsteiler wiederum ist abhängig von der Stellung des Schleifers des Rückmelde-Potentiometers (RP), die wiederum von der Stellung der Achse des Stellmotors (M) bzw. von der Stellung der Luftklappe (RK) abhängig ist. In der Figur 3d ist die Spannung am zweiten Meßpunkt (P2) in ihrem zeitlichen Verlauf bei vorgegebenem zeitlichen Verlauf des Potentials an der dritten Klemme (KL3) und bei vorgegebener Schleiferstellung des Rückmelde-Potentiometers (RP) wiedergegeben. In der Figur 3e ist das Potential am dritten Meßpunkt (P3) in seinem zeitlichen Verlauf bei dem gleichen zeitlichen Verlauf der Spannung an der dritten Klemme (KL3) und bei dem gleichen zeitlichen Verlauf der Schleiferstellung des Rückmelde-Potentiometers (RP) wiedergegeben.

Die Spannung am vierten Meßpunkt (P4) und am fünften Meßpunkt (P5) ist abhängig vom Ausgangssignal der Vergleicher (V1 und V2) und von der Spannung an der dritten Klemme (KL3). Der zeitliche Verlauf des Potentials am vierten Meßpunkt (P4) ist in der Figur 3f wiedergegeben. Der zeitliche Verlauf des Potentials am fünften Meßpunkt (P5) ist in der Figur 3g wiedergegeben.

In den ersten drei Perioden der Pulsfolge an der dritten Klemme (KL3) betrage die Pulsbreite etwa die Hälfte der Periode (T1). In den zweiten drei Perioden der Pulsfolge an der dritten Klemme (KL3) betrage die Pulsdauer etwa 1/4 der Periode (T1). In den dritten drei Perioden der Pulsfolge an der dritten Klemme (KL3) betrage die Pulsbreite etwa 3/4 der Periode (T1). Das invertierte Signal an dem ersten Meßpunkt (P1) zeigt dann das in der Figur 3b dargestellte Verhalten. Der Potentialverlauf am Monoflop-Meßpunkt (PMF) zeigt dann den in etwa in Figur 3c dargestellten zeitabhängigen Verlauf. Weiterhin sei angenommen, daß der Schleifer des Rückmelde-Potentiometers (RP) sich in der ersten, vierten und siebten Periode der Pulsfolge an der dritten Klemme (KL3) in etwa in einer Mittelstellung befinde. In einer zweiten, fünften und achten Periode der Pulsfolge an der Klemme (KL3) befinde sich der Schleifer des Rückmelde-Potentiometer (RP) in einer Stellung, die einem höheren Potential am Spannungsteiler entspricht. In der dritten, sechsten und neunten Periode der Pulsfolge an der dritten Klemme (KL3) befinde sich der Schleifer des Rückmelde-Potentiometers (RP) in einer Stellung, die einem geringeren Potential am Spannungsteiler entspricht. Der Verlauf der Ausgangsspannung der Vergleicher (V1 und V2) entspricht dann den in den Figuren 3d und 3e dargestellten Diagrammen. Am vierten Meßpunkt (P4) und am fünften Meßpunkt (P5) ist genau dann ein von Null verschiedener Steuerstrom zur Steuerung der Transistoren der jeweiligen Brückendiagonale der Transistor-Brücken-Schaltung (BS) vorhanden, wenn sowohl der jeweilige Ausgang des Vergleichers (V1 oder V2), als auch die Spannung entweder an der dritten Klemme (KL3) oder an dem ersten Meßpunkt (P1) hohes Potential aufweisen. Dies ist grundsätzlich nur entweder am vierten Meßpunkt (P4) oder am fünften Meßpunkt (P5) der Fall, so daß der Stellmotor (M) immer nur jeweils in eine Drehrichtung mit Strom versorgt wird. Die Dauer der Versorgung mit Strom ist dabei von der jeweiligen Zeitdauer abhängig, in der sowohl der Ausgang des jeweiligen Vergleichers, als auch der jeweilige Meßpunkt positives Potential aufweist. Daraus ergibt sich der in der Figur 3f für den vierten Meßpunkt (P4) bzw. der in der Figur 3g für den fünften Meßpunkt (P5) dargestellte zeitliche Verlauf des Potentials.

Man erkennt, daß im Falle der Gleichheit der Potentiometerstellung mit der Vorgabe der Pulsfolge an der dritten Klemme (KL3) die Transistoren beider Brückendiagonalen im geöffneten Zustand sind, so daß der Stellmotor (M) nicht angesteuert wird. Weicht die Potentiometerstellung und damit die Stellung der Luftklappe (LK) von der durch die Pulsfolge vorgegebenen Stellung, so wird die Brückendiagonale angesteuert, die den Motor und damit die Luftklappe (LK) in Richtung der vorgegebenen Luftklappenstellung bewegt. Dies ist am vierten Meßpunkt (P4) für eine dritte Zeitdauer (t3), eine siebte Zeitdauer (t7), eine achte Zeitdauer (t8) und eine neunte Zeitdauer (t9) für eine erste Drehrichtung der Fall. Für eine andere Drehrichtung wird der Stellmotor (M) über das positive Potential am fünften Meßpunkt (P5) für eine zweite Zeitdauer (t2), eine vierte Zeitdauer (t4), eine fünfte Zeitdauer (t5) und eine sechste Zeitdauer (t6) angesteuert.

Man erkennt weiterhin, daß die Zeitdauer oder Pulsbreite, in der der Stellmotor (M) periodisch angesteuert wird, abhängig ist von der Abweichung der Schleiferstellung des Rückmelde-Potentiometers (RP) von der durch die Pulsfolge an der dritten Klemme (KL3) vorgegebenen Größe. Weicht die Schleiferstellung des Rückmelde-Potentiometers (RP) stark von dem durch die Pulsfolge vorgegebenen Sollwert ab, wie dies z. B. während der fünften Zeitdauer (t5) für die andere Drehrichtung und während der neunten Zeitdauer (t9) für die eine Drehrichtung der Fall ist, so wird der Stellmotor (M) entsprechend länger angesteuert. Ist die Abweichung der Schleiferstellung des Rückmelde-Potentiometers (RP) vom durch die Pulsfolge vorgegebenen Sollwert geringer, so wird der Stellmotor (M) z. B. in den Zeitdauern (t2 und t6) für die andere Drehrichtung und in den Zeitdauern (t3 und t8) für die eine Drehrichtung entsprechend kürzer angesteuert. Durch diese Maßnahme wird also die Stellung der Luftklappe (LK) sukzessive und pulsweise der durch die Pulsfolge an der dritten Klemme (KL3) vorgegebenen Größe angeglichen, wobei die Änderungsgeschwindigkeit der Stellung der Luftklappe (KL) mit geringer werdender Abweichung ebenfalls geringer wird, so daß ein Überschwengen der Stellung der Luftklappe über den durch die Pulsfolge vorgegebenen Sollwert hinaus, sicher vermieden wird.

Aus dem Ausführungsbeispiel wird ersichtlich, daß durch die erfindungsgemäßen Maßnahmen der Steuerung der Stellvorrichtung (SV) durch eine Pulsfolge und dadurch, daß die Stellvorrichtung erfindungsgemäß den Lageregelkreis aufweist, nicht nur die Zahl der zwischen der Heizungssteuerung oder -regelung (HS) und der Stellvorrichtung (SV) erforderlichen Verbindungsleitungen wesentlich reduziert ist. Wie das Ausführungsbeispiel zeigt, wird durch die in den Unteransprüchen aufgeführten Maßnahmen die Erfindung vorteilhaft dahingehend ausgestaltet, daß die Verarbeitung der Pulsfolge an der dritten Klemme (KL3) und der Aufbau des Lageregelkreises mit einfachen Mitteln kostengünstig und mit geringer Empfindlichkeit gegen äußere Einflüsse wie z. B. hochfrequente Störstrahlung oder Spannungsschwankung realisiert werden kann.

Die erfindungsgemäße Vorrichtung kann insbesondere aufgrund ihrer Einfachheit und der damit erzielbaren Vorteile nicht nur in Kraftfahrzeugen, sondern auch für andere Räume verwendet werden, deren Temperatur zu steuern oder zu regeln ist.

## Patentansprüche

1. Vorrichtung zum Steuern oder Regeln der Lage eines Stellglieds, insbesondere eines Stellglieds zum Steuern der Innenraumtemperatur oder Leuchtweite von Kraftfahrzeugen, mit einer elektrischen Steuerung oder Regelung, mit einem Lageregelkreis, mit einer elektrischen Stellvorrichtung, die durch die Steuerung oder Regelung steuerbar ist und die einen Stellmotor und ein Rückmelde-Potentiometer aufweist, mit einem Stellglied, dessen Stellung durch die Stellvorrichtung veränderbar ist, wobei die Stellvorrichtung den Lageregelkreis aufweist und die Stellvorrichtung durch eine Pulsfolge steuerbar ist, wobei die Pulsfolge eine konstante Periode aufweist, und wobei die Pulsfolge eine abhängig von der Steuerung oder Regelung veränderliche Pulsbreite aufweist, dadurch gekennzeichnet, daß die Stellvorrichtung (SV) eine monostabile Kippschaltung (MF) aufweist, die die Pulsfolge als Eingangssignal empfängt, daß die Stellvorrichtung zwei Vergleicher (V1, V2) aufweist, daß der nichtinvertierende Eingang des ersten Vergleichers (V1) und der invertierende Eingang des zweiten Vergleichers (V2) mit dem Ausgang der Kippschaltung (MF) verbunden sind, und daß der invertierende Eingang des ersten Vergleichers (V1) und der nichtinvertierende Eingang des zweiten Vergleichers (V2) mit dem Mittelabgriff eines Spannungsteiles verbunden sind, dessen Spannungsabfall von der Stellung des Rückmelde-Potentiometers (RP) abhängig ist.

2. Vorrichtung nach Anspruch 1, dadurch gekennzeichnet, daß der Spannungsteiler drei Widerstände (R8, R9, R10) aufweist und daß die Vergleicher (V1, V2) derart mit dem Spannungsteiler verbunden sind, daß der invertierende Eingang des ersten Vergleichers (V1) ein höheres Potential aufweist, als der nichtinvertierende Eingang des zweiten Vergleichers (V2).

3. Vorrichtung nach Anspruch 1, dadurch gekennzeichnet, daß der Ausgang des ersten Vergleichers (V1) über eine erste Diode (D1) mit der ersten Pulsfolge beaufschlagbar ist und/oder daß der Ausgang des zweiten Vergleichers (V2) über eine zweite Diode (D2) mit der invertierten Pulsfolge beaufschlagbar ist.

4. Vorrichtung nach Anspruch 3, dadurch gekennzeichnet, daß der Stellmotor (M) durch eine Transistor-Brücken-Schaltung mit Strom beaufschlagbar ist, daß eine erste Brückendiagonale durch den ersten Vergleicher (V1) steuerbar ist und daß eine zweite Brückendiagonale durch den zweiten Vergleicher (V2) steuerbar ist.

## Claims

1. An apparatus for controlling or regulating the position of a final control element, particularly a final control element for controlling the interior temperature or extent of illumination of motor vehicles, with an electrical control system or regulating system, with a positioning control circuit, with an electrical regulating device which is controllable by the control system or regulating system and which comprises a servomotor and a repeater potentiometer, with a final control element, the position of which can be varied by the regulating device, wherein the regulating device comprises the positioning control circuit and the regulating device is controllable by a pulse train, wherein the pulse train has a constant cycle, and wherein the pulse train has a pulse width which can be varied depending on the control system or regulating system, characterised in that the regulating device (SV) comprises a monostable multivibrator (MF) which receives the pulse train as an input signal, that the regulating device has two comparators (V1, V2), that the non-inverting input of the first comparator (V1) and the inverting input of the second comparator (V2) are connected to the output of the multivibrator (MF), and that the inverting input of the first comparator (V1) and the non-inverting input of the second comparator (V2) are connected to the central tap of a voltage divider, the voltage drop of which is dependent on the position of the repeater potentiometer (RP).

2. An apparatus according to claim 1, characterised in that the voltage divider has three resistors (R8, R9, R10) and that the comparators (V1, V2) are connected to the voltage divider in such a way that the inverting input of the first comparator (V1) is at a higher potential than the non-inverting input of the second comparator (V2).

3. An apparatus according to claim 1, characterised in that the output of the first comparator (V1) can be acted upon by the first pulse train via a first diode (D1) and/or that the output of the second comparator (V2) can be acted upon by the inverted pulse train via a second diode (D2).

4. An apparatus according to claim 3, characterised in that the servomotor (M) can be supplied with current by a transistor bridge circuit, that a first bridge diagonal is controllable by the first comparator (V1) and that a second bridge diagonal is controllable by the second comparator (V2).

## Revendications

1. Dispositif pour la commande ou la régulation de l'état d'un organe de réglage, en particulier d'un organe de réglage pour la commande de la température d'espace intérieur ou de la portée d'éclairage de véhicules automobiles, comprenant une commande ou une régulation électrique, comprenant un circuit de régulation d'état, comprenant un dispositif de réglage électrique, qui est commandable par la commande ou la régulation et qui présente un moteur de réglage et un potentiomètre d'information en retour, comprenant un organe de réglage, dont la position est changeable par le dispositif de réglage, le dispositif de réglage présentant le circuit de régulation d'état et le dispositif de réglage étant commandable par une suite d'impulsions, la suite d'impulsion présentant une période constante, et la suite d'impulsions présentant une largeur d'impulsion changeable en fonction de la commande ou de la régulation, caractérisé en ce que le dispositif de réglage (V) présente une bascule électronique monostable (MF), qui reçoit la suite d'impulsions comme signal d'entrée, que le dispositif de réglage présente deux comparateurs (V1, V2), que l'entrée non invertie du premier comparateur (V1) et l'entrée invertie du deuxième comparateur (V2) sont reliées avec la sortie de la bascule électronique (MS), et que l'entrée invertie du premier comparateur (V1) et l'entrée non invertie du deuxième comparateur (V2) sont reliées avec la prise médiane d'une partie de tension, dont la chute de tension est dépendante de la position du potentiomètre d'information en retour (RP).

2. Dispositif selon la revendication 1, caractérisé en ce que le diviseur de tension présente trois résistances (R8, R9, R10) et que les comparateurs (V1, V2) sont reliés de telle sorte avec le diviseur de tension, que l'entrée invertie du premier comparateur (V1) présente un potentiel plus élevé que l'entrée non invertie du deuxième comparateur (V2).

3. Dispositif selon la revendication 1, caractérisé en ce que la sortie du premier comparateur (V1) est sollicitable, par l'intermédiaire d'une première diode (D1), avec la première suite d'impulsions, et/ou que la sortie du deuxième comparateur (V2) est sollicitable, par l'intermédiaire d'une deuxième diode (V2), avec la suite d'impulsions invertie.

4. Dispositif selon la revendication 3, caractérisé en ce que le moteur de réglage (M) est sollicitable avec du courant par un circuit à pont à transistors, en ce qu'une première diagonale de pont est commandable par le premier comparateur (V1) et en ce qu'une deuxième diagonale de pont est commandable par le deuxième comparateur (V2).
